# EUROPEAN PATENT APPLICATION

(11) **EP 1 331 577 A1**
(43) Date of publication of application: **30.07.2003**
(21) Application number: 01976746.6
(22) Date of filing: 18.10.2001
(51) Int. Cl.: G06F 17/30, H04N 5/76

(54) **DYNAMIC IMAGE CONTENT SEARCH INFORMATION MANAGING APPARATUS**

(30) Priority: 20.10.2000 JP 2000320184; 02.04.2001 JP 2001102836
(71) Applicant: Sharp Kabushiki Kaisha, Osaka-shi, Osaka 545-8522 (JP)
(72) Inventor: WATANABE, Shuichi, Chiba-shi, Chiba 266-0005 (JP); TOKUMO, Yasuaki, Chiba-shi, Chiba 266-0005 (JP); OKADA, Hiroyuki, Chiba-shi, Chiba 266-0016 (JP)
(74) Representative: Brown, Kenneth Richard
(86) International application number: JP0109160
(87) International publication number: WO02035390

(57) **Abstract**

In a search information managing apparatus (1) managing search information (15) having a tree structure for searching for moving image contents, a search information analyzing unit (101) separates the search information into one or more structural search information elements (152) representing a structure of the moving image contents, one or more semantic search information elements (153) representing characteristics in semantic context of the moving image contents, and one or more signal search information elements (154) representing physical characteristics of signals of the moving image contents, and outputs the resulting elements. A unit search information forming unit (102-104) forms a small unit of search information (152A, 153A, 154A) by collecting at least one of the structural search information elements, semantic search information elements and signal search information elements output from the search information analyzing unit (101). By transmitting only the structural information of the moving image contents in advance and transmitting, as needed the unit search information corresponding to specific search information required by a searcher at the time of conducting a search, the amount of search information to be transmitted can be reduced.

## Description

### Technical Field

The present invention relates to apparatus and method for managing information having a tree structure (hereinafter referred to as search information) for searching for moving image contents, and to a search apparatus. More specifically, the present invention relates to search information managing apparatus and method enabling efficient storage or transmission of search information, as well as to a search apparatus executing a search process using the search information.

### Background Art

For moving image contents, every time point or every spatial point (image plane) of the moving image contents can be an object of search. Therefore, in order to execute an exact search, it is necessary to playback the moving image contents as a whole and to check in detail. Such a method of searching, however, is not at all efficient, and when the number of moving image contents as the target of search increases, the method would be even less practical.

Various methods have been proposed as methods enabling a user to quickly and efficiently search for desired moving image contents or a desired portion of the moving image contents, in which search information (which search information is also referred to as metadata for search) to be added to corresponding moving image contents is prepared, a search is executed based on the search information, and the desired moving image contents or the desired portion of the moving image contents is obtained.

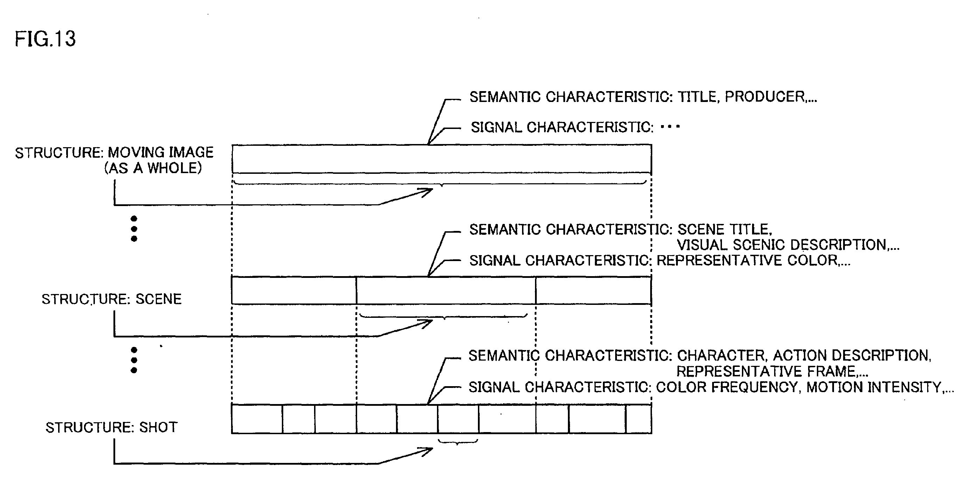

Fig. 13 shows a schematic structure of general moving image contents. Such a structure is widely known and disclosed, for example, in Japanese Patent Laying-Open Nos.10-108071 and 10-257436.

As can be seen from Fig.13, the entire moving image is divided, along time, into a number of scenes. Here, the term scene refers to a section mainly of a semantic unity along the time axis, and scenes may include large sections such as part 1 and part 2 of a movie as well as a very small section such as a scene of "A and B fighting against each other." Therefore, the actual division of the entire moving image into scenes is not limited to one stage division such as shown in Fig. 13, but rather proceeds gradually over a plurality of stages.

One scene is further divided into a number of shots (or into smaller scenes) along the time axis. Here, the term shot refers to one section along time consisting of continuous frame images picked-up by one operation, and in the moving images, it refers to a section between two editing points (cut points).

A shot is a kind of a scene, and the shot may further be divided into smaller shots (sub-shots). Though not shown, the shot can eventually be divided into one-by-one frame images.

In this manner, the moving image contents has a hierarchical structure divided from the entire body to small portions and further to smaller portions. Corresponding search information is added to each level of the hierarchy.

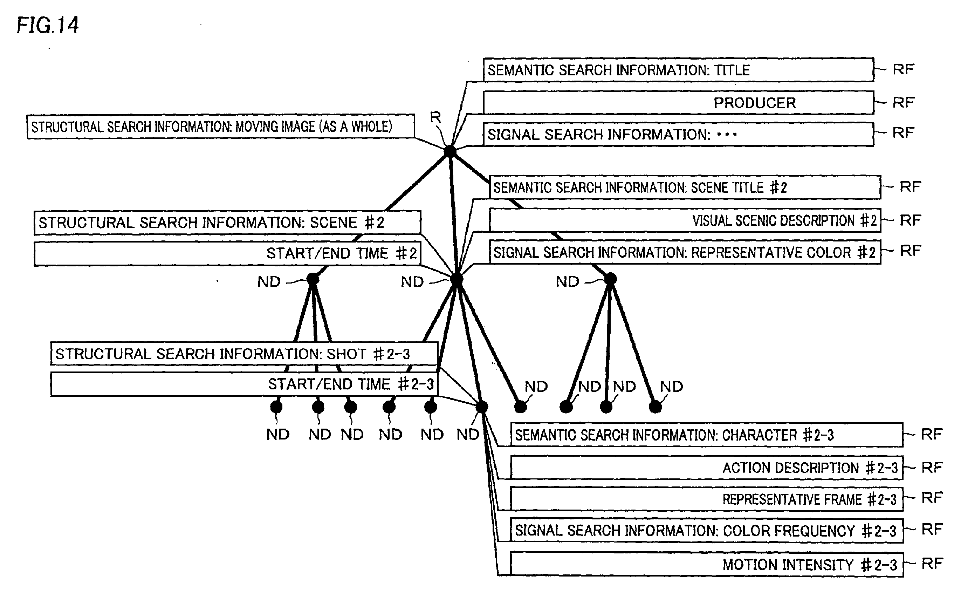

Fig. 14 represents search information for the moving image contents of Fig. 13. The search information of moving image contents is represented by a tree structure such as shown in Fig.14. The search information of moving image contents includes structural search information, semantic search information and signal search information.

The structural search information refers to information representing the hierarchical structure of the moving image contents shown in Fig. 13. The structural search information includes structuring information for representing the tree structure, that is, relation between various scenes or shots of the entire moving images, and structural attribute information representing attribute of each scene or shot resulting from the division.

In the tree of Fig. 14, the root R represents the entire moving images, and each node ND represents each scene or shot obtained by the division. A node ID or level information appended to the root R or to each node ND constitutes the structuring information, and a start time, end time information or the like appended to each scene or shot constitutes the structural attribute information.

The semantic search information refers to search information defined by semantic characteristics of the moving image contents. For example, the title of the entire moving image contents, information of a producer, and information of visual scenic description of a scene constitute the semantic search information.

The signal search information refers to search information defined by physical characteristics of signals of the moving image contents. For example, color frequency information, motion intensity information or the like for each shot (or for a representative frame image thereof) constitutes the signal search information. The semantic search information and signal search information are provided as leaves RF linked to each corresponding node ND.

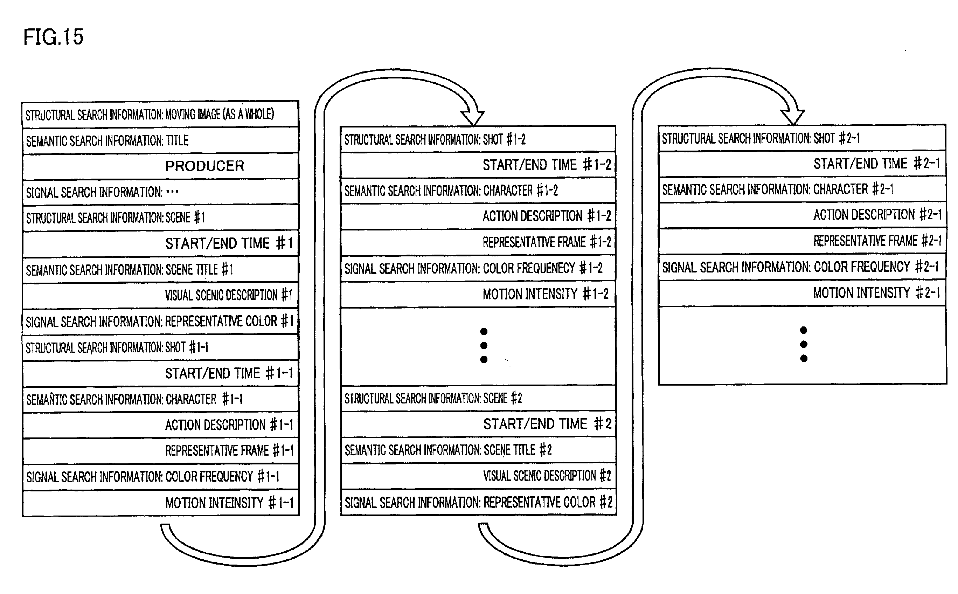

Fig. 15 represents the manner of recording when the search information having the tree structure shown in Fig. 14 is recorded. As can be seen from Fig. 15, the search information having the tree structure shown in Fig. 14 is recorded by tracing the root R and the nodes ND from shallow to deeper levels of the hierarchy (along the direction from the root R to the nodes ND), and from left to right (earlier time point to later time point), with priority given to the depth (when there is no node ND any longer to be traced in the lower level of one node ND, tracing is switched to a neighboring node ND on the right side), and the search information as the leaf RF added to the root R or the node ND is recorded successively.

Though the highest level (root R) is shown as representing one, entire moving image content in Figs. 13 to 15, it is not limited to one moving image content, and it may be considered as a set of a plurality of moving image contents. By way of example, the highest level may be video programs as a whole that are broadcast in one day on one channel. The video programs as a whole broadcast in one day on one channel are divided into programs one by one, that is, respective moving image contents, in the next level. Each of the moving image contents is divided into a plurality of scenes, and each scene is divided into a plurality of shots.

By the search information having the tree structure, it becomes possible to present the structure of the moving image contents along time in a form easily understandable by the user, associated with various pieces of search information. Therefore, the search information is well suited for operations such as editing of the corresponding moving image contents by the user with visual confirmation based on the search information, or editing of the search information itself. It is noted, however, that when the size of the moving image contents becomes large, the size of the tree representing the search information also becomes very large.

Assume an execution model in which moving image contents and search information are stored in a server apparatus, a user accesses from a client terminal to the server, obtains the search information and executes a search at the client terminal. Here, a situation is not desirable in which a formidable amount of search information must be fully obtained by the client terminal from the server before the user can start operation of the client terminal to execute a search. Specifically, it is desired that the search information having the tree structure is divided into an appropriate plurality of small units of search information and transmitted to the client terminal, and that the user can execute a search to some extent at the client terminal utilizing the received small units of search information.

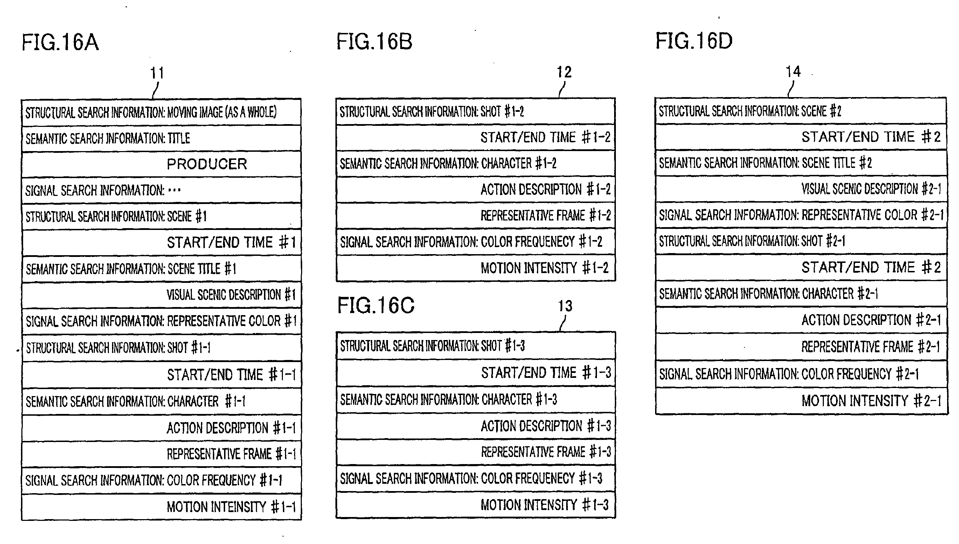

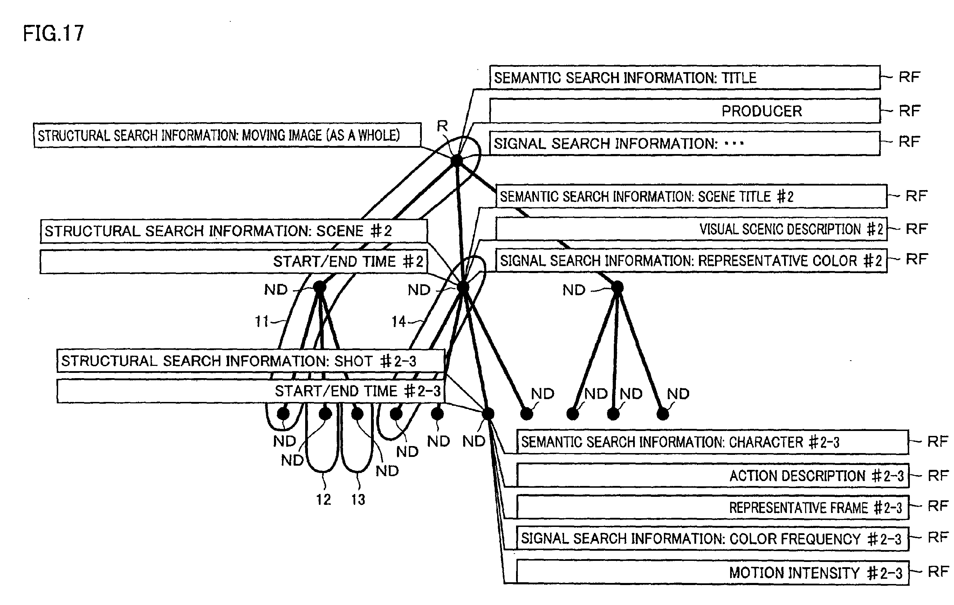

By dividing the search information having the tree structure in accordance with sections along time axis into scenes or shots conventionally, it is possible to form a plurality of small units of search information, including small units 11 to 14 of search information shown in Figs. 16A to 16D. The small units of search information 11 to 14 can be obtained by dividing the search information into a set of a node ND and its leaves RF starting from each of the lowermost nodes ND of the tree, or a set of nodes ND and their leaves RF including a lowermost node and connected higher levels nodes ND, as shown in Fig. 17.

The small unit of search information obtained by division in accordance with section along time holds the information of time structure of the corresponding moving image contents as it is, and therefore, it can be suitably used for transmission in synchronization with the moving image contents, to enable filtering of the moving image contents on-line, based on the search information.

As disclosed in Japanese Patent Laying-Open No. 8-110912, it is well known to store the search information having the tree structure divided into the tree structure and a table of appended information representing attribute information of each of the nodes ND of the tree structure. According to this approach, there are two divisible units, that is, the tree structure and the table. The appended information table, however, cannot be handled independently, and the above described division along time section is not available.

In the present specification, the above described small unit of search information obtained by the division will be referred to as "unit search information." Further, node ID information or the like for uniquely identifying a node ND of the structural search information will be referred to as "search information element" of the structural search information (or structural search information element), action description information or the like of the semantic search information will be referred to as "search information element" of the semantic search information (or semantic search information element), and each of color frequency information, motion intensity information and the like of the signal search information will be referred to as "search information element" of the signal search information (or signal search information element).

The small unit of search information conventionally obtained by dividing the search information having the tree structure is unit search information corresponding to the time section, that is, the structural element of the moving image contents such as a scene or a shot.

In such unit search information, however, search information elements of the structural search information, semantic search information and signal search information exist in a complicated manner. There may be, for example, a request that only the structural search information of the moving images is to be known (it is desired to know how the moving images are divided into scenes or shots). Alternatively, there may be a request that only the color frequency information of each shot is desired to conduct a search based on color frequency information shot by shot, or a request that only the motion intensity information is desired to conduct a search based on the motion intensity information shot by shot. Conventionally, a searcher must obtain the unit search information that includes the search information elements of the structural search information, semantic search information and signal search information existing in a complicated manner, and the searcher must analyze and use the obtained information to meet such requests.

It is efficient from the view point of a searcher that search information elements of the same type (type such as the color frequency information or motion intensity information) added to respective shots or respective scenes are obtained collectively for a plurality of shots or a plurality of scenes as the components of the moving images, and that a search can be conducted by comparing and collating the same type of information elements. For example, using the color frequency information among the signal search information elements, a shot can be searched by detecting one that has color frequency information matching to a desire among color frequency information added to the shots.

Though Japanese Patent Laying-Open No. 8-110912 contains a hint to handle only the tree structure separate from the search information, it does not suggest handling of other appended information independently, or division and management based on detailed types of search information such as described above.

The search information elements of the structural search information and the signal search information are generally given in fixed formats. In contrast, the search information elements of the semantic search information often include free text data and the like of unfixed length, such as the data of action description.

Therefore, when the search information contains a plurality of search information elements in a complicated manner, it is necessary to analyze each of the structural search information, signal search information and the semantic search information even if only the search information elements of the structural search information and the signal search information of the fixed length are to be extracted. This imposes a considerable burden on the searcher.

In contrast, when the search information is formed by collecting only the signal search information elements, the search information can be handled easily, for example, by skipping data of a fixed length.

As compared with the manner of search in which the search information is obtained containing the structural search information, semantic search information and signal search information in a complicated manner in accordance with time structure, the manner of search in which the structural search information is obtained to enable understanding of the structure of the moving images as a whole, and the signal search information or the semantic search information is added as needed to proceed with the search is very natural. The conventional method of dividing the search information, however, is not suitable for the latter manner of searching.

The unit of search information obtained by division of the search information conventionally having the tree structure holds the information of time structure of the corresponding moving image contents as it is, and therefore, it is suitable for a manner of search in which the search information is transmitted in parallel with moving image contents, to enable filtering by an on-line search. When a large amount of data of moving image contents must be searched off-line, for example, and a desired shot is to be searched for simply by using specific search information such as the color frequency information added to the entire moving image contents, it has been necessary to read and analyze all the search information, in order to extract the specific necessary search information. Accordingly, there are many wasteful processes.

For an off-line search, it is natural to obtain only the search information of the same type added to a plurality of moving image components, such as a plurality of shots, and to compare and collate the same to conduct a search. By way of example, a server apparatus may extract and transmit to a client terminal only the color frequency information added to each of the plurality of shots, among the signal search information elements, the client terminal receives the color frequency information, and the user detects a desired shot based on the received color frequency information and requests the server apparatus only the data of the corresponding shot.

As described above, the manner of division of the search information for moving image contents should be switched in accordance with the manner of search. Conventionally, however, such a consideration has not been made.

### Disclosure of the Invention

An object of the present invention is to provide a search information managing apparatus and a search information managing method that enable efficient use of search information having a tree structure added to moving image contents, as well as to provide a search apparatus that is capable of executing an efficient search process.

According to an aspect of the present invention, the search information managing apparatus includes a separating unit and a unit search information forming unit, for managing the search information having the tree structure corresponding to the moving image contents divided into small units of search information.

The separating unit separates the search information into structural search information representing the structure of the moving image contents, semantic search information representing characteristics in semantic context of the moving image contents, and signal search information representing physical characteristics of signals of the moving image contents, and outputs the same. The unit search information forming unit forms at least one of small units of search information formed of the structural search information, semantic search information or signal search information output from the separating unit.

Therefore, when the structural information of the moving image contents only is transmitted in advance before a search and unit search information corresponding to specific search information required by the searcher is transmitted as needed at the time of a search, the amount of search information to be transmitted can be reduced.

According to another aspect of the present invention, the search information managing apparatus includes a separating unit and a unit search information forming unit, for managing the search information having the tree structure corresponding to the moving image contents divided into small units of search information.

The separating unit separates and extracts from the search information, one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information. The unit search information forming unit forms a small unit of search information by arranging one or a plurality of search information elements extracted by the separating unit respectively in accordance with a prescribed format.

Therefore, among the thus formed small units of search information, it is easy to specify each of the elements of search information, and hence, the small units of search information can easily be used when a search of the moving image contents is conducted.

In the above described search information managing apparatus, one or a plurality of search information elements extracted by the separating unit may correspond to the signal search information representing physical characteristics of signals of the moving image contents.

As the signal search information is used as the small unit of search information, it becomes possible when, for example, the moving image contents are to be searched using the color frequency information only, to use only the corresponding color frequency information for transmission or search, and thus, an efficient search using only the signal search information can be realized.

In the above described search information managing apparatus, one or a plurality of search information elements extracted by the separating unit may correspond to the semantic search information representing characteristics in semantic context of the moving image contents.

As the semantic search information is used as the small unit of search information, it becomes possible when, for example, the moving image contents are to be searched using characters of each scene only, to use only the information of corresponding characters for transmission or search. Thus, an efficient search using only the semantic search information can be realized.

In the above described search information managing apparatus, the prescribed format may represent an arrangement of one or a plurality of search information elements extracted by the separating unit, in accordance with order of appearance in the tree structure.

As the search information elements of the same type constituting the small unit of search information are arranged in accordance with the order of appearance of the tree structure, information representing preceding/succeeding relation of each of the search information elements can be omitted. Accordingly, it becomes possible to form a small unit of search information with smaller signal amount to be used for a search for moving image contents.

As the search information elements are arranged in accordance with the order of appearance of the tree structure, scenes continuous in time constituting the moving images can easily be related to each of the search information elements. Therefore, when the structure of the moving image contents is simple, it is possible to search for the moving image contents simply by the small unit of search information consisting of the search information elements of the semantic search information or the signal search information.

In the above described search information managing apparatus, the small unit of search information may be formed by adding, to the arrangement of one or a plurality of search information elements extracted by the separating unit, additional information including type information or including position information of the tree structure, shared by one or a plurality of search information elements extracted by the separating unit.

In this manner, the type information (whether the search information element represents color frequency or character information) shared by the search information elements of the same type, or the position information representing at which level of the tree structure the search information element is connected, is added to the arrangement of the search information elements. Therefore, it can easily be known from the type information what search information element is included in the small unit of search information, and it can quickly be known from the position information which search information element corresponding to which level of the tree structure having a plurality of levels is included.

In the above described search information managing apparatus, the small unit of search information may be formed by adding, to the arrangement of one or a plurality of search information elements extracted by the separating unit, additional information including position information of the tree structure related to each of the one or a plurality of search information elements extracted by the separating unit.

In this manner, the additional information related to the search information elements of the same type is provided in the arrangement in correspondence to each of the search information elements. In other words, information is added to each of the search information elements representing, for example, to which node of the tree structure it is connected. Therefore, it becomes possible to include, in one small unit of search information, search information elements of the same type belonging to a plurality of levels of the tree structure having a plurality of levels. Thus, degree of freedom in a search for the moving image contents can be made higher.

In accordance with a further aspect of the present invention, the search information managing apparatus includes, for forming small units of search information from search information having a tree structure corresponding to moving image contents and for managing the same, a record position information extracting unit and a unit search information forming unit.

The record position information extracting unit extracts, for each of one or a plurality of search information elements given by one or a plurality of leaves of the tree structure or given by onr or a plurality of sub-trees consisting of an arbitrary set of a node and leaves or nodes of lower levels linked to the node of the tree structure, representing elements of the same type included in the search information, record position information representing the position where the search information element is recorded. The unit search information forming unit forms a small unit of search information by arranging the record position information extracted by the record position information extracting unit corresponding to each of the one or a plurality of search information elements in accordance with a prescribed format.

Therefore, among the small units of search information formed by the search information having tree structure corresponding to the moving image contents, each of the search information elements designated by the record position information in the small units of search information can easily be specified, and the small units of search information can easily be used at the time when a search is conducted. It is possible for the user to specify a necessary search information element even when the search information element itself is not transmitted, and an efficient search is possible by transmitting only the necessary search information element at every search.

In the above described search information managing apparatus, the one or a plurality of search information elements may correspond to the signal search information representing physical characteristics of the signals of the moving image contents.

As the signal search information representing physical characteristics of signals of the moving image contents is used as the search information element corresponding to the record position information, it becomes possible when, for example, a search is conducted using the color frequency information only, to use only the corresponding color frequency information for transmission or search, and thus, an efficient search using only the signal search information can be realized.

In the above described search information managing apparatus, the one or a plurality of search information elements may correspond to the semantic search information representing characteristics in semantic context of the moving image contents.

As the semantic search information is used as the search information element corresponding to the record position information, it becomes possible when, for example, a search is conducted using characters of each scene only, to use only the information of corresponding characters for transmission or search. Thus, an efficient search using only the semantic search information can be realized.

In the above described search information managing apparatus, the prescribed format may represent an arrangement of respective record position information in accordance with the order of appearance in the tree structure of respective ones of the corresponding one or a plurality of search information elements.

As the record position information constituting the small units of search information is arranged in accordance with the order of appearance in the tree structure of the corresponding search information elements of the same type, information representing preceding/succeeding relation of each of the search information elements can be omitted. Accordingly, it becomes possible to form small units of search information with smaller signal amount to be used for a search.

Further, as the record position information is arranged in accordance with the order of appearance in the tree structure, scenes continuous in time constituting the moving images can easily be related to the search information elements each represented by the record position information. Therefore, when the structure of the moving image contents is simple, it is possible to obtain a small unit of search information formed of record position information of search information element consisting of semantic search information or signal search information, and to search for the moving image contents simply by the search information element of the semantic search information or signal information represented by the record position information, without obtaining the structural information.

In the above described search information managing apparatus, the small unit of search information may be formed by adding, to the arrangement of record position information corresponding to one or a plurality of search information elements, additional information including type information or including position information of the tree structure, shared by the one or a plurality of search information elements or including position information of the shared tree structure.

As the type information representing whether the search information element represents color frequency or character information, and the position information representing at which level of the tree structure the search information element is connected, are added, it can easily be known what search information element is designated by the record position information in the small unit of search information, and it can quickly be known which search information element designated by the record position information corresponds to which level of the tree structure having a plurality of levels.

In the above described search information managing apparatus, the small unit of search information may be formed by adding, to the arrangement of record position information corresponding to one or a plurality of search information elements, additional information including position information of the tree structure related to each of the one or a plurality of search information elements.

Therefore, the additional information related to the same type of search information elements is placed in the arrangement corresponding to the record position information corresponding to the search information elements, and indicates the position information representing to which node of the tree structure the corresponding search information element has been connected. Therefore, it becomes possible to include, in one small unit of search information, record position information corresponding to search information elements of the same type existing across a plurality of levels of the tree structure having a plurality of hierarchical levels, and hence degree of freedom in searching can be improved.

In accordance with a further aspect of the present invention, the search information managing apparatus includes, for managing the search information having a tree structure corresponding to the moving image contents divided into small units of search information, first and second search information dividing units and a division selecting unit.

The first search information dividing unit divides the search information into structural search information representing the structure of the moving image contents, semantic search information representing characteristics in the semantic context of the moving image contents, and signal search information representing physical characteristics of signals of the moving image contents, and forms, from the divided structural search information, semantic search information and signal search information, small units of search information. The second search information dividing unit divides the search information along time section based on the tree structure, and forms, from divided search information, small units of search information. The division selecting unit selects whether the search information is to be divided by the first search information dividing unit or the second search information dividing unit, in accordance with the desired manner of search.

Therefore, when the search information having the tree structure corresponding to the moving image contents is to be divided into small units of search information and managed, it is possible to selectively form, in accordance with the desired manner of search, either the small units of search information associated with the types of search information formed from the structural search information, semantic search information and signal search information respectively, or small units of search information each consisting of information obtained by dividing the search information along time section. Accordingly, it becomes possible to select the optimal small unit of search information in accordance with the manner of search for the moving image contents such as an on-line search or an off-line search, and thus, a highly efficient search becomes possible.

According to a still further aspect of the present invention, the search information managing apparatus includes, for managing the search information having the tree structure corresponding to moving image contents divided into small units of search information, first and second search information dividing units and a division selecting unit.

The first search information dividing unit separates and extracts, from the search information, one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information, and forms small units of search information by arranging the one or a plurality of search information elements in a prescribed format. The second search information dividing unit divides the search information along time section based on the tree structure, and forms, from the divided search information, small units of search information. The division selecting unit selects whether the search information is to be divided by the first search information dividing unit or the second search information dividing unit, in accordance with the desired manner of search.

Therefore, when the search information having the tree structure corresponding to the moving image contents is to be divided into small units of search information and managed, it is possible to selectively form, in accordance with the desired manner of search, either the small units of search information obtained by arranging, in a prescribed format, each of the one or a plurality of search information elements given by one or a plurality of leaves of the tree structure or given by a plurality of sub-trees consisting of an arbitrary set of a node and leaves or nodes of lower levels linked to the node of the tree structure, representing elements of the same type included in the search information, or small units of search information each formed of information obtained by dividing the search information along time section. Accordingly, it becomes possible to select optimal small unit of search information in accordance with the manner of search for the moving image contents such as an on-line search or an off-line search, and thus, a highly efficient search becomes possible.

According to a still further aspect of the present invention, a search information managing method includes, for managing search information having a tree structure corresponding to moving image contents divided into small units of search information, the separating step and the unit search information forming step.

In the separating step, the search information is separated into structural search information representing the structure of the moving image contents, semantic search information representing characteristics in semantic context of the moving image contents, and signal search information representing physical characteristics of signals of the moving image contents. In the unit search information forming step, at least one small unit of search information is formed, which consists of the structural search information, semantic search information or signal search information respectively, obtained by the separating step.

Therefore, when the structural information of the moving image contents only is transmitted in advance before a search and unit search information including the structural search information, semantic search information or signal search information required by the searcher is transmitted as needed at the time of a search, the amount of search information to be transmitted can be reduced.

According to a still further aspect of the present invention, a search information managing method includes, for managing search information having a tree structure corresponding to moving image contents divided into small units of search information, the separating step and the unit search information forming step. In the separating step, one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information are separated and extracted from the search information. In the unit search information forming step, a small unit of search information is formed by arranging, in a prescribed format, one or a plurality of search information elements extracted by the separating step.

Therefore, it is easy to specify each of the search information elements included in the thus formed small units of search information, and the search information can be used easily at the time of conducting a search for the moving image contents.

In accordance with a still further aspect of the present invention, the search information managing method includes, for forming and managing small units of search information from search information having a tree structure corresponding to moving image contents, the record position information extracting step and the unit search information forming step.

In the record position information extracting step, for each of one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information, record position information representing the position where the search information element is recorded is extracted. In the unit search information forming step, a small unit of search information is formed by arranging, in a prescribed format, the record position information corresponding to the one or a plurality of search information elements extracted by the record position information extracting step.

Therefore, when the small units of search information are formed from the search information and managed, for each of one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information, record position information thereof is extracted and arranged in a prescribed format, to form the small units of search information. Therefore, each of the search information elements designated by the record position information within the small units of search information can be specified, and hence, search information can easily be used at the time of conducting a search. Because of the small units of search information, it becomes possible for the user to specify the necessary search information element without transmitting the search information element itself, and by transmitting only the necessary search information element at every search, the moving image contents can be searched efficiently.

According to a still further aspect of the present invention, the search information managing method includes, for managing search information having a tree structure corresponding to moving image contents divided into small units of search information, first and second search information dividing step and the division selecting step.

In the first search information dividing step, the search information is divided into structural search information representing the structure of the moving image contents, semantic search information representing characteristics in the semantic context of the moving image contents, and signal search information representing physical characteristics of signals of the moving image contents, and from the divided structural search information, semantic search information or signal search information, small units of search information are formed. In the second search information dividing step, the search information is divided along time section based on the tree structure, and from divided search information, small units of search information are formed. In the division selecting step, whether the search information is to be divided by the first search information dividing step or the second search information dividing step is selected, in accordance with the desired manner of search.

Therefore, when the search information having the tree structure corresponding to the moving image contents is to be divided into small units of search information and managed, the format of the small units of search information obtained by division is selected in accordance with the desired manner of search. Accordingly, it becomes possible to select optimal small unit of search information in accordance with the manner of search for the moving image contents such as an on-line search or an off-line search, and thus, a highly efficient search becomes possible.

In accordance with a still further aspect of the present invention, the search information managing method is for managing search information having a tree structure corresponding to moving image contents divided into small units of search information, and it includes the first forming step, the second forming step and the selecting step.

In the first forming step, one or a plurality of search information elements given by one or a plurality of sub-trees are separated and extracted from the search information, and by arranging the one or a plurality of search information elements in a prescribed format, a small unit of search information is formed. The aforementioned sub-tree consists of leaves in the tree structure or an arbitrary set of a node of the tree structure and leaves or nodes of lower levels linked to the node, representing the elements of the same type included in the search information.

In the second forming step, the search information is divided along time section based on the tree structure, and from each of the divided search information, a small unit of search information is formed.

In the selecting step, whether the small unit of search information is to be formed by the first forming step or the second forming step is selected, in accordance with the desired manner of search.

Therefore, when the search information having the tree structure corresponding to the moving image contents is to be divided into small units of search information and managed, in accordance with the desired manner of search, either the small units of search information obtained by arranging, in a prescribed format, the one or a plurality of search information elements given by one or a plurality of sub-trees associated with the types of the search information elements, or small units of search information obtained by dividing the search information along time section are formed. Accordingly, it becomes possible to select the optimal small unit of search information in accordance with the manner of search for the moving image contents such as an on-line search or an off-line search, and thus, a highly efficient search becomes possible.

In accordance with a still further aspect of the present invention, the search apparatus is for conducting a search based on a small unit of search information obtained by dividing search information having a tree structure corresponding to moving image contents, characterized by the following. The small unit of search information is at least one of small units of search information formed of structural search information representing structure of the moving image contents, semantic search information representing characteristics in semantic context of the moving image contents, or signal search information representing physical characteristics of signals of the moving image contents, and the apparatus includes a holding unit and a search executing unit. The holding unit holds the small units of search information. The search executing unit executes a search for the moving image contents using the small units of search information held by the holding unit.

As the small units of search information used for the search are formed from the structural search information representing the structure of the moving image contents, semantic search information representing characteristics in semantic context of the moving image contents and signal search information representing physical characteristics of signals of the moving image contents, respectively, it is possible to conduct a search based only on the information representing the structure of the moving image contents, or to conduct a search using a small unit of search information corresponding to specific search information required by the searcher. Thus, an efficient search becomes possible.

In accordance with a still further aspect of the present invention, the search apparatus has a holding unit and a search executing unit, for executing a search based on small units of search information obtained by dividing search information having a tree structure corresponding to moving image contents, and the small units of search information are formed by separating from the search information, each of the one or a plurality of search information elements given by one or a plurality of leaves of the tree structure or given by one or a plurality of sub-trees consisting of an arbitrary set of a node and leaves or nodes of lower levels linked to the node of the tree structure, representing elements of the same type included in the search information, and arranging the same in a prescribed format. The holding unit holds the small unit of search information, and the search executing unit executes a search for the moving image contents, using the small unit of search information held by the holding unit.

Therefore, in a search, each of the search information elements forming the small units of search information can be specified easily, and a highly efficient search is possible.

In accordance with a still further aspect of the present invention, the search apparatus for executing a search based on small units of search information formed from search information having a tree structure corresponding to moving image contents includes first and second holding units and a search executing unit. The first holding unit holds small units of search information. The second holding unit holds one or a plurality of search information elements obtained by using the small units of search information. The search executing unit executes a search for the moving image contents, using the small units of search information and the one or a plurality of search information elements. The small units of search information are formed, for each of the one or a plurality of search information elements given by one or a plurality of leaves of the tree structure or given by one or a plurality of sub-trees consisting of an arbitrary set of a node and leaves or nodes of lower levels linked to the node of the tree structure representing elements of the same type included in the search information, by arranging, in a prescribed format, record position information representing the position where the corresponding search information element is recorded.

A search is conducted by using small units of search information formed, for each of the one or a plurality of search information elements given by one or a plurality of leaves of the tree structure or given by one or a plurality of sub-trees consisting of an arbitrary set of a node and leaves or nodes of lower levels linked to the node of the tree structure representing elements of the same type included in the search information, by arranging, in a prescribed format, record position information representing the position where the corresponding search information element is recorded. Therefore, each of the search information elements designated by the record position information in the small units of search information can easily be specified, and a highly efficient search becomes possible.

### Brief Description of the Drawings

Fig. 1 is a schematic diagram of a search information managing apparatus in accordance with the first and second embodiments of the present invention.
Fig.2 represents search information having a tree structure used in the first embodiment of the present invention.
Fig.3 represents unit search information of the divided structural search information in accordance with the first embodiment of the present invention.
Fig. 4 shows an internal configuration of the semantic unit search information forming unit and the signal unit search information forming unit in the search information managing apparatus in accordance with the first embodiment of the present invention.
Figs. 5A to 5C represent unit search information of the semantic search information obtained by division in accordance with the first embodiment of the present invention.
Figs. 6A to 6C represent another unit search information of the semantic search information obtained by division in accordance with the first embodiment of the present invention.
Figs. 7A to 7C represent unit search information of signal search information obtained by division in accordance with the first embodiment of the present invention.
Figs. 8A to 8C represent another unit search information of signal search information obtained by division in accordance with the first embodiment of the present invention.
Fig.9 is a flow chart representing the search information managing method in accordance with the first embodiment of the present invention.
Fig. 10 is a schematic diagram of the search apparatus in accordance with the first and second embodiments of the present invention.
Figs. 11A to 11D represent unit search information of semantic search information and signal search information, respectively, formed in accordance with the second embodiment of the present invention.
Fig. 12 is a schematic diagram of the search information managing apparatus in accordance with the third embodiment of the present invention.
Fig. 13 illustrates a general structure of moving image contents.
Fig. 14 represents, in a tree structure, search information added to the moving image contents of Fig. 13.
Fig. 15 illustrates the method of recording the search information of the moving image contents shown in Fig. 13.
Figs. 16A to 16D represent conventional division of the search information having the tree structure.
Fig. 17 represents a conventional method of managing search information having the tree structure.

### Best Modes for Carrying Out the Invention

Embodiments of the present invention will be described with reference to the drawings.

### (First Embodiment)

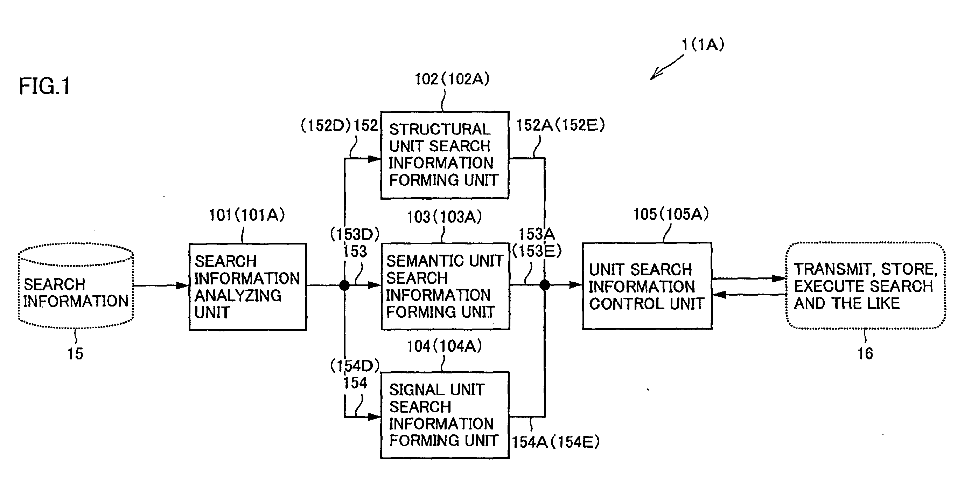

Fig. 1 shows a functional configuration of a search information managing apparatus 1 in accordance with the present embodiment. Referring to Fig. 1, search information managing apparatus 1 includes a search information analyzing unit 101, a structural unit search information forming unit 102, a semantic unit search information forming unit 103, a signal unit search information forming unit 104 and a unit search information control unit 105. Search information analyzing unit 101 receives, as an input, search information 15 having a tree structure corresponding to moving image contents, separates the input search information 15 into one or more search information elements 152 of the structural search information, one or more search information elements 153 of the semantic search information and one or more search information elements 154 of the signal search information, and selectively outputs the same. The search information elements 152 to 154 output from search information analyzing unit 101 are applied to corresponding unit search information forming units 102 to 104, respectively.

Structural unit search information forming unit 102 receives one or more search information elements 152 of the structural search information output from search information analyzing unit 101, and arranges the received search information elements 152 to form and output unit search information 152A of the structural search information. From unit search information 152A of the structural search information, structural information of the corresponding moving image contents can be known.

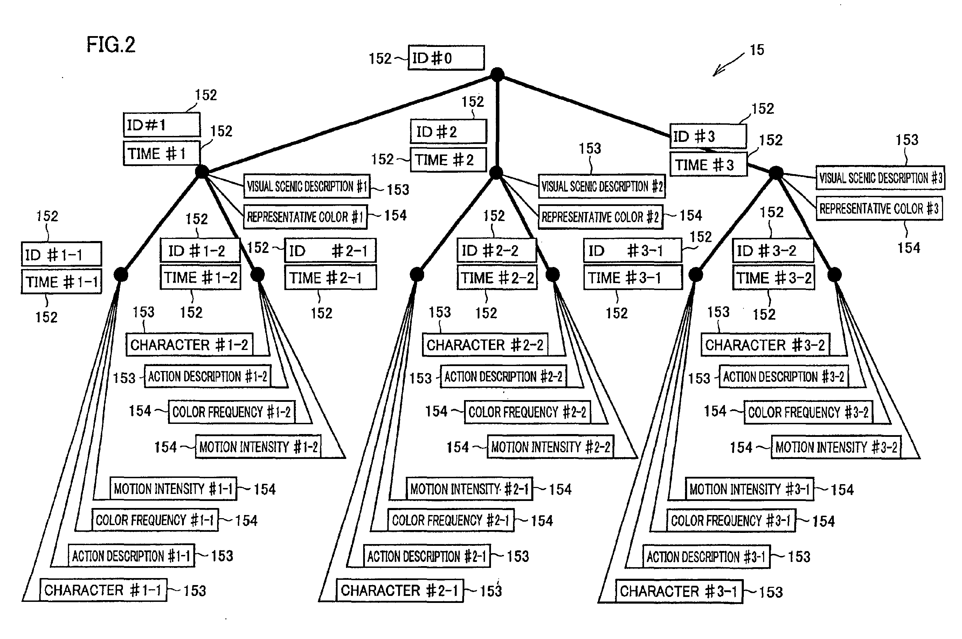

Fig. 2 shows the search information having the tree structure used in the present embodiment. For simplicity of description, it is assumed that in the present search information 15, structural search information element 152 consists only of node ID information and time information of each scene and each shot, semantic search information element 153 consists only of visual scenic description information of each scene and character information and action description information of each shot, and signal search information element 154 consists only of representative color information of each scene and color frequency information and motion intensity information of each shot. Actual search information 15 additionally has various search information elements, and the present invention can similarly be applied to the various search information elements.

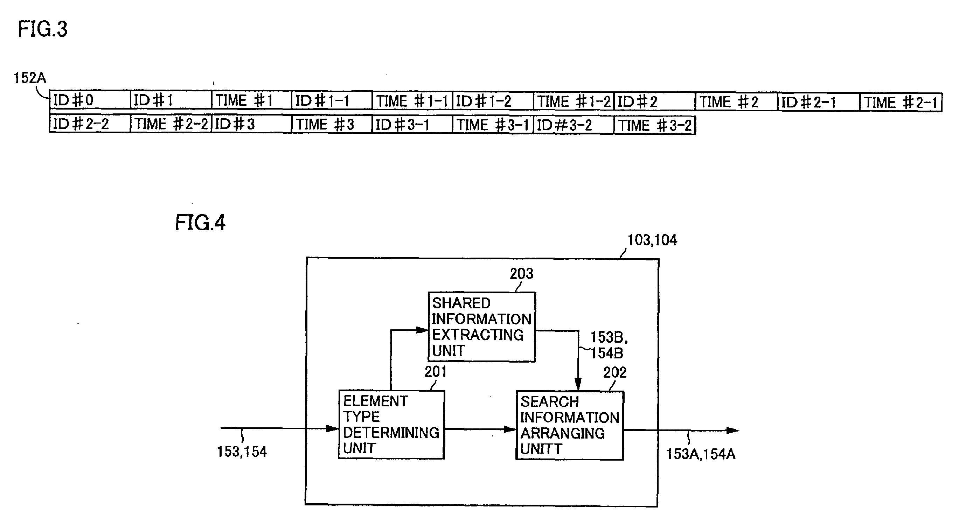

Fig. 3 shows unit search information 152A formed by extracting structural search information element 152 from search information 15 having the tree structure of Fig. 2.

Semantic unit search information forming unit 103 receives one or more search information elements 153 of the semantic search information applied from search information analyzing unit 101, and arranges the same to form and output one or more units of search information 153A of the semantic search information.

Fig. 4 shows an internal configuration of semantic unit search information forming unit 103 of Fig. 1. Referring to Fig. 4, semantic unit search information forming unit 103 includes an element type determining unit 201, a search information arranging unit 202 and a shared information extracting unit 203. Here, search information elements 153 (leaves RF) of one same type connected to nodes ND (or root R) of the same type in the tree structure of search information 15 are arranged, type by type of the search information elements 153, while maintaining order relation thereof, to form unit search information 153A. Specifically, element type determining unit 201 receives search information elements 153 of semantic search information applied from search information analyzing unit 101, and while determining the types (representing different types such as character information, action description information and the like) of the received search information elements, outputs each of the received search information elements 153 together with the result of determination, to search information arranging unit 202 and to shared information extracting unit 203. Search information arranging unit 202 arranges search information elements 153 type by type based on the information applied from element type determining unit 201 to form unit search information 153A. At this time, information 153B (for example, information representing the type of search information element 153) shared by search information elements 153 included in respective units of search information 153A formed type by type by search information arranging unit 201 is extracted by shared information extracting unit 203 and applied to search information arranging unit 202. Search information arranging unit 202 places shared information 153B applied from shared information extracting unit 203 at the head of the formed unit search information 153A. Other than this example, information representing format or data length of semantic search information elements 153 may be used as the shared information 153B, and information used as the shared information 153B is not specifically limited. As to the position of placing the shared information 153B, it is not limited to the head of unit search information 153A, and it may be placed at the tail of unit search information 153A or within unit search information 153A. Alternatively, shared information 153B may be recorded at a different record position together with information representing correspondence between unit search information 153A and the shared information 153B. Shared information 153B and the process by shared information extracting unit 203 may be omitted.

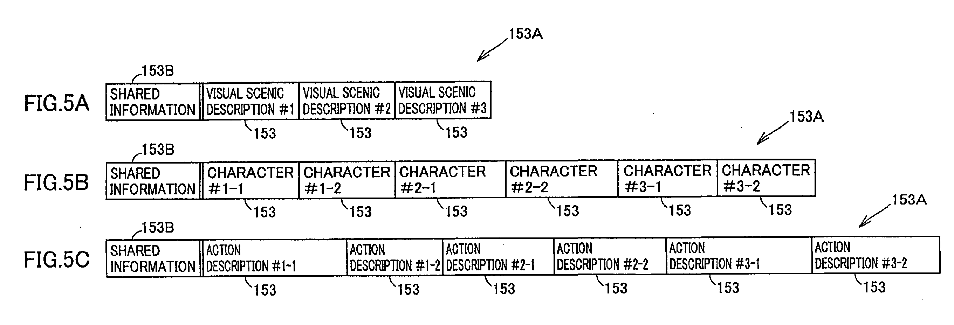

Figs. 5A to 5C represent unit search information 153A formed by extracting visual scenic information, character information and action description information as semantic search information elements 153 from search information 15 having the tree structure shown in Fig. 2, and by arranging the extracted information together with shared information 153B.

Semantic unit search information forming unit 103 may receive part of structural search information elements 152 and extract shared information 153B. For example, when action description information (semantic search information elements 153) corresponding to leaves RF connected to nodes ND of the "same level" are extracted and unit search information 153A is formed using the extracted action description information, the level information representing the "same level" may be used as the shared information 153B. Such shared information 153B related to the level of nodes ND indicates, when scenes (nodes ND representing the scenes) exist over a plurality of levels, which scene of which level corresponds to the unit search information 153A.

Specifically, based on the level information of nodes ND from structural search information element 152, it is possible to separately form unit search information 153A. The units of search information 153A distinguish semantic search information elements 153 of the same element type but added to nodes of different levels from each other, and each unit consists only of the semantic search information elements 153 added to the same level.

When a plurality of semantic search information elements 153 added to scenes existing over a plurality of levels are collected to form unit search information 153A and it is difficult to extract shared information 153B, necessary structural information may be extracted for each semantic search information element 153 and added as additional information 153C for each semantic search information element 153 to form unit search information 153A.

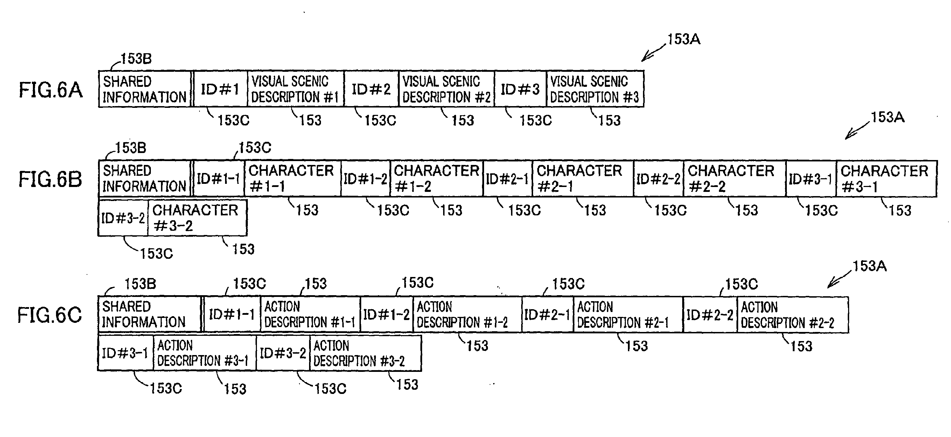

Figs. 6A to 6C represent units of search information 153A having node ID information of respective nodes ND added as structural information 153C. Structural information 153C that can be added is not limited to information representing the node ID information, and any information that can be related to the structural search information such as start/end time information may be added. Alternatively, taking one level as a reference, level information of the nodes ND thereof may be added as shared information 153B to unit search information 153A, and information representing a difference from the reference level (such as information representing a level higher by one or lower by one) may be added as additional information 153C for each semantic search information element 153. At that time, addition of difference information may be omitted for semantic search information element 153 that has no difference. Other than these, a flag indicating whether there is a semantic search information element 153 or not corresponding to a certain scene or shot, or information representing importance when semantic search information element is used, may be used as the information 153C to be added to each semantic search information element 153. The information 153C to be added to each semantic search information element 153 is not specifically limited.

Signal unit search information forming unit 104 receives one or more search information elements 154 of the signal search information from search information analyzing unit 101, arranges the received search information elements 154 to form one or more units of search information 154A of the signal search information, and outputs the same. The internal configuration of signal unit search information forming unit 104 is similar to that shown in Fig. 4. Here, signal search information elements 154 (leaves RF) of one same type connected to nodes ND (or root R) of the same type in the tree structure of search information 15 are arranged, type by type of the signal search information elements 154, while maintaining order relation thereof, to form one or more units of search information 154A. Specifically, element type determining unit 201 shown in Fig. 4 receives signal search information elements 154, determines the types (representing different types of information such as color frequency information and motion intensity information) of respective ones of the received signal search information elements 154, and outputs the result of determination and signal search information elements 154 to search information arranging unit 202 and to shared information extracting unit 203. Based on the applied information, search information arranging unit 202 arranges the signal search information elements 154 type by type, to form and output one or more units of search information 154A. At this time, based on the applied information, shared information extracting unit 203 extracts information 154B (such as information representing the type of signal search information element 154) shared by signal search information elements 154 included in respective ones of unit search information 154A formed by search information arranging unit 202 from signal search information elements 154, and applies the same to search information arranging unit 202. Search information arranging unit 202 places the shared information 154B applied from shared information extracting unit 203 at the head of unit search information 154A. Other than this example, information representing data format, sample number of color frequency information or data length of signal search information elements 154 may be used as the shared information 154B, and information used as the shared information 154B is not specifically limited. As to the position of placing the shared information 154B, it is not limited, and it may be placed at the tail of unit search information 154A or within unit search information 154A. Alternatively, shared information 154B may be recorded at a different record position together with information representing correspondence between unit search information 154A and the shared information 154B. Shared information 154B and the process by shared information extracting unit 203 may be omitted.

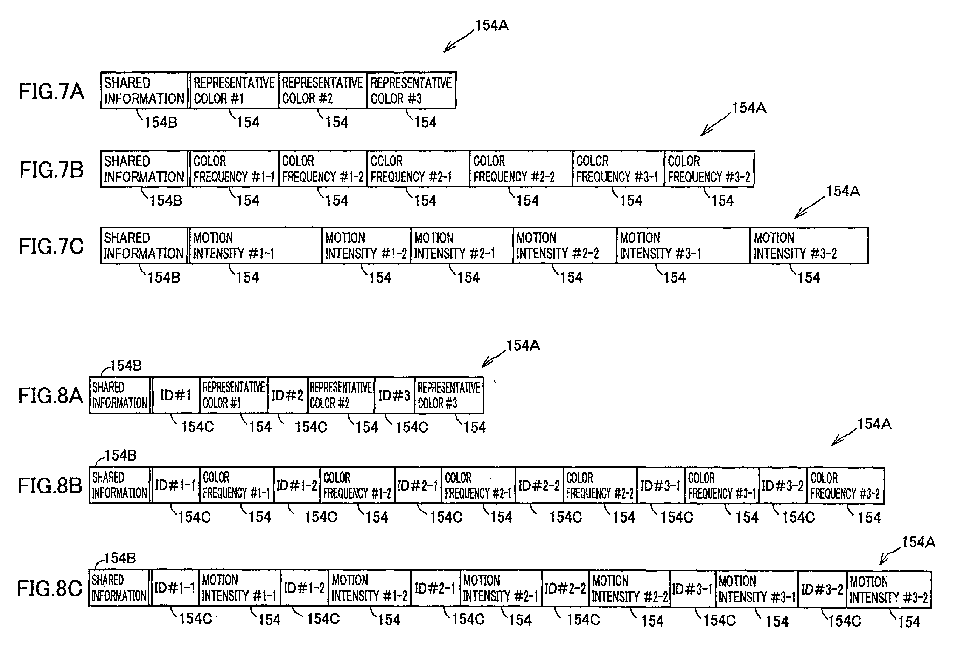

Figs. 7A to 7C represent unit search information 154A. Unit search information 154A of Figs. 7A to 7C are formed by extracting representative color information, color frequency information and motion intensity information as signal search information elements 154 from search information 15 having the tree structure shown in Fig. 2, and by arranging the extracted information together with shared information 154B. Signal unit search information forming unit 104 may receive part of structural search information elements 152 and extract shared information 154B. For example, when color frequency information (signal search information elements 154) corresponding to leaves RF connected to nodes ND of the "same level" are extracted and unit search information 154A is formed using the extracted color frequency information, the level information representing the "same level" may be used as the shared information 154B. Such shared information 154B related to the level of nodes ND indicates, when scenes (nodes ND representing the scenes) exist over a plurality of levels, which scene of which level corresponds to the unit search information 154A.

Specifically, based on the level information of nodes ND from structural search information element 152, it is possible to separately form unit search information 154A. The units of search information 154A distinguish signal search information elements 154 of the same element type but added to nodes of different levels from each other, and each unit consists only of the signal search information elements 154 added to the same level.

When a plurality of signal search information elements 154 added to scenes existing over a plurality of levels are collected to form unit search information 154A and it is difficult to extract shared information 154B, necessary structural information may be extracted for each search information element 154 and added as additional information 154C for each signal search information element, to form unit search information 154A.

Figs. 8A to 8C represent units of search information 154A having node ID information of respective nodes ND added as structural information 154C. Structural information 154C that can be added is not limited to information representing the node ID information, and any information that can be related to the structural search information such as start/end time information may be added. Alternatively, taking one level as a reference, level information of the nodes ND thereof may be added as shared information 154B to unit search information 154A, and information representing a difference from the reference level (such as information representing a level higher by one or lower by one) may be added as additional information 154C for each signal search information element 154. At that time, addition of difference information may be omitted for signal search information element 154 that has no difference.

Other than these, a flag indicating whether there is a signal search information element 154 or not corresponding to a certain scene or shot, or information representing importance when signal search information element is used, may be used as the additional information 154C to be added to each signal search information element 154. The information 154C to be added to each signal search information element 154 is not specifically limited.

Respective units of search information 152A, 153A and 154A of the structural search information, semantic search information and signal search information generated by the structural unit search information forming unit 102, semantic unit search information forming unit 103 and signal unit search information forming unit 104 are applied to unit search information control unit 105.

Unit search information control unit 105 is connected to a processing unit 16 outside the search information managing apparatus 1. Processing unit 16 corresponds to a transmitting unit for transmitting information, a storing unit recording and storing information on some medium, or a portion for executing an information search process. When processing unit 16 is a transmitting unit, search information managing apparatus 1 selects one or more units of search information meeting the request from the transmitting unit from units of search information 152A, 153A and 154A, and applies the same to processing unit 16 (transmitting unit).

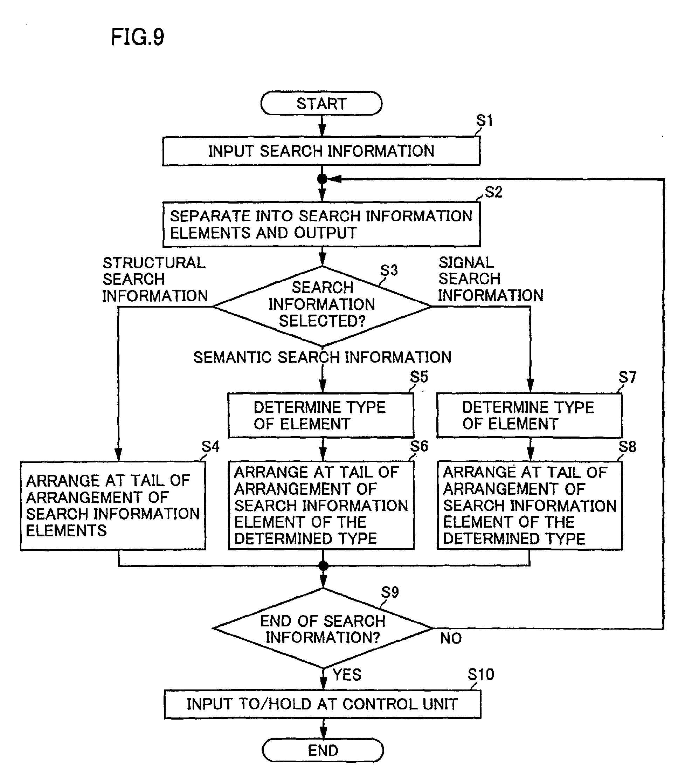

Referring to the flow chart of Fig. 9, the search information managing method in accordance with the present embodiment will be described. First, search information 15 to be divided is designated, and search information analyzing unit 101 receives as an input the designated search information 15 (step S1: in the following, a step will be simply denoted by S), separates the input search information 15 into search information elements, and successively outputs structural search information element 152, semantic search information element 153 and signal search information element 154 obtained by the separation (S2). Whether the successively obtained search information elements correspond to the structural search information, semantic search information or signal search information is determined, and based on the result of determination, the search information elements are applied to any of structural unit search information forming unit 102, semantic unit search information forming unit 103 and signal unit search information forming unit 104 (S3).

As structural search information elements 152 are successively applied, structural unit search information forming unit 102 receives as inputs the applied structural search information elements 152, and places the input structural search information elements 152 at the tail of an arrangement formed by the structural search information elements 152 that have been input by that time (S4). Semantic unit search information forming unit 103 receives as inputs the applied semantic search information elements 153, determines the types thereof (S5), and places the input semantic search information elements 153 at the tail of the arrangement formed by the semantic search information elements of the type same as the type of the result of determination that have been input by that time (S6).

Signal unit search information forming unit 104 receives as inputs the applied signal search information elements 154, determines the types thereof (S7), and places the input signal search information elements 154 at the tail of the arrangement formed by the signal search information elements 154 of the same type as the type of the result of determination that have been input by that time (S8).

At the end of each of the processes for forming units of search information 152A to 154A of steps S4 to S8, whether it is an end of search information 15 or not is determined (S9). When it is determined to be the end, the formed units of search information 152A to 154A are respectively applied to unit search information control unit 105, and held therein (S10). If it is not the end, separation and reading of search information elements are again repeated (S2).

By performing the process in accordance with the above described configuration and flow chart, it becomes possible to transfer or use minimum information necessary to conduct a search for moving image contents, and a highly efficient search can be executed, for example, in an off-line search.

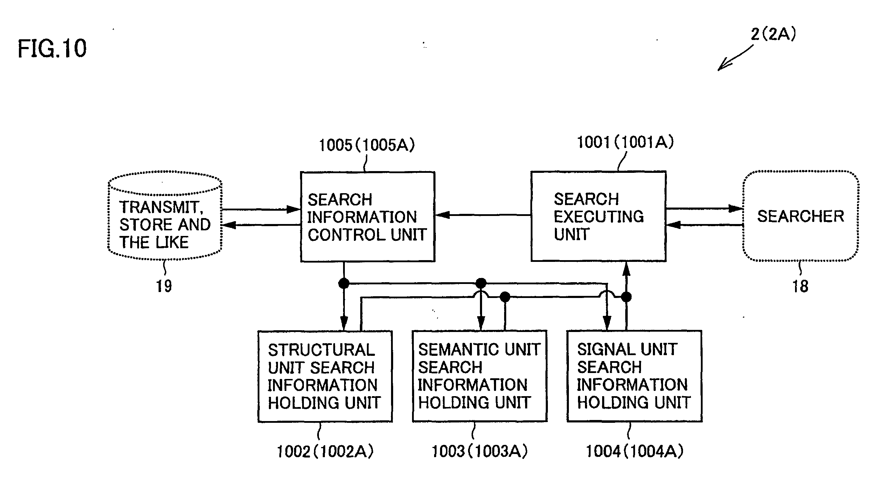

Fig. 10 represents a schematic configuration of a search apparatus 2 in accordance with the present embodiment. As shown in Fig.10, the search apparatus 2 is operated by a searcher 18, and it includes a search executing unit 1001, a structural unit search information holding unit 1002, a semantic unit search information holding unit 1003, a signal unit search information holding unit 1004 and a search information control unit 1005. Search executing unit 1001 selects and obtains, in accordance with a search request input by the searcher 18, one or more of structural unit search information 152A held (recorded) in structural unit search information holding unit 1002, semantic unit search information 153A held (recorded) in semantic unit search information holding unit 1003 and signal unit search information 154A held (recorded) in signal unit search information holding unit 1004, and using the obtained unit search information, executes a search for the moving image contents. When the unit search information to be selected is not held in any of corresponding unit search information holding units 1002, 1003 and 1004, search executing unit 1001 issues a request for the corresponding unit search information to search information control unit 1005.

Search information control unit 1005 is connected to a transmitting unit for transmitting a plurality of types of unit search information, or to a storing unit 19 recording and storing a plurality of types of unit search information on a prescribed medium in advance. When a request for unit search information is input from search executing unit 1001, search information control unit 1005 obtains, in response to the request, the unit search information corresponding to the request from transmitting unit or storing unit 19 by transmission or reading, and stores the obtained unit search information to corresponding one of the unit search information holding units 1002, 1003 and 1004. Search executing unit 1001 executes a search using the unit search information obtained in this manner.

In response to the request for the structural search information input by the searcher 18, unit search information 152A of the structural search information is obtained from the transmitting unit or storing unit 19. The structural search information may be automatically obtained without any request form the searcher 18.

Thereafter, the searcher 18 arbitrarily selects a method of search suitable for the desired moving image contents, and requests search information corresponding to the selected method of search. By way of example, when a method of search based on color characteristic of moving image contents is considered the most desirable, the searcher 18 requests color frequency information. Alternatively, the searcher 18 may simply input a broad request such as "information related to color desired," and in response to the request, search executing unit 1001 may determine and appropriately "issue a request for color frequency information." To meet the request, unit search information 154A consisting of the color frequency information is obtained from transmitting unit or storing unit 19.

Based on the units of search information 152A and 154A formed by the structural search information and the color frequency information obtained in this manner, search executing unit 1001 executes a search. In this manner, the amount of search information transmitted at the time of a search can be reduced as compared with the conventional manner. The procedure of search described here is merely an example and not limiting.

The period how long the obtained unit search information is held is not specifically limited. When the client terminal that executes a search is one having a small storage capacity such as a portable information terminal, the obtained unit search information may be discarded every time a search is conducted, and when the terminal has sufficient storage capacity, the information may be continuously held while searches are conducted. Alternatively, such a management may be possible in that the unit search information may be held for a prescribed time period, and the unit search information may be discarded if it is not accessed in that period.

Each unit search information (152A, 153A, 154A) shown in Figs. 3, 5A to 5C, 6A to 6C, 7A to 7C and 8A to 8C is formed by arranging corresponding search information elements (152, 153, 154) in order, and each of the search information elements may be coupled, or each of the search information elements may be held in an independent format. In the latter case, it is possible to output only the necessary number of search information elements (152, 153, 154) as partial unit search information (152A, 153A, 154A).

In Figs.3, 5A to 5C, 6A to 6C, 7A to 7C and 8A to 8C, all the search information elements (152, 153, 154) of the same type included in search information 15 shown in Fig. 2 are used to form units of search information (152A, 153A, 154A). The units of search information, however, may be formed by using only a part of search information elements. The part may include a subset (subset as compared with the whole) of search information elements neighboring successively in time, or a set of sub samples picked-up at a prescribed interval.

Each of the search information 15 and search information elements (152, 153, 154) described in the present embodiment is example only, and the search information and search information elements are not limited thereto. The tree structure of search information 15 may have a larger number of levels, or it may consist of two levels (only the root R and one or more nodes ND of the first level). The tree structure may have any shape. The present embodiment is applicable regardless of the types of search information elements.

In the present embodiment, though the search information elements collected as the unit search information are described as individual information corresponding to each "leaf" of the tree structure such as the color frequency information, it is not limiting. For example, "color information" collectively including a plurality of pieces of information related to "color" such as color frequency information and representative color information may be considered as one element, and the unit search information may be formed regarding the one element as the search information element.

Here, each piece of color frequency information or representative color information corresponds to "leaf RF" of the tree structure, and "color information" corresponds to a "node ND" having the leaves RF at the lower level. Specifically, in the present embodiment, respective search information elements forming the unit search information are not limited to detailed pieces of search information corresponding to the "leaves RF" of the tree structure, and they may be an arbitrary set of detailed pieces of search information below a "node ND", which can be regarded as a group.

Here, an arbitrary set of leaves RF or nodes ND linked at a lower level to a certain node ND (with each of the nodes ND further linked to leaves RF or nodes ND of lower level) forms a tree with the starting node considered as a root R, and this tree is referred to as a "partial tree", or "sub-tree" of the original tree. In other words, the present embodiment may be applied, considering the portion of the search information that corresponds to the "partial tree" of the tree structure representing the search information to be the search information element.

In the search information managing apparatus 1 and the search information managing method in accordance with the present embodiment, all the search information elements (152, 153, 154) included in the search information having the tree structure are extracted in a similar manner, all the units of search information (152A, 153A, 154A) corresponding to the extracted search information elements respectively are formed in parallel, and all the thus formed units of search information are managed for transmission, for storage or for a supply to be used for a search for moving image contents. It is also possible, however, to extract only the search information elements of a specific type and form only a unit of search information corresponding to the extracted specific type of search information element.

By way of example, only the color frequency information may be extracted among the search information elements, and only the unit search information corresponding to the extracted color frequency information may be formed and managed by unit search information control unit 105. In that case, search information analyzing unit 101, signal unit search information forming unit 104 and unit search information control unit 105 only function in search information managing apparatus 1 shown in Fig. 1. Therefore, structural unit search information forming unit 102 and semantic unit search information forming unit 103 may be omitted.

The same applies to search apparatus 2 in accordance with the present embodiment. When a search is executed based particularly on the color frequency information among the signal search information, and the structural search information and semantic search information are deemed unnecessary, only the search executing unit 1001, signal unit search information holding unit 1004 and search information control unit 1005 of search apparatus 2 shown in Fig. 10 function. Therefore, structural unit search information holding unit 1002 and semantic unit search information holding unit 1003 may be omitted.

When part of the search information elements is extracted and corresponding unit search information is formed using the extracted part of the search information elements, the remaining search information 15 from which the search information elements are extracted may be utilized while maintaining the tree structure.

Specifically, here, the tree representing the original search information 15 is divided into a partial tree as a part of the original tree and one or a plurality of units of search information consisting of a plurality of search information elements. In the present invention, dependent on which search information element is selected for extraction, original search information 15 having the tree structure can be divided in various shapes.

In the present embodiment, structural information of the search information 15, that is, position information of a node ND or a leaf RF in the tree structure, and type information of the search information element, that is, information representing that the element is action description information (semantic search information element 153) or color frequency information (signal search information element 154) are described as independent pieces of information. When the search information elements forming search information 15 are determined in advance and the tree structure is fixed, the position of each search information element in the tree structure can be specified, and therefore, the type of the search information element can be represented simply by the structural information. In other words, the structural information and the type information are equivalent. Here, the process of adding type information as shared information 153B and 154B corresponding to search information elements 153 and 154 described with reference to the present embodiment, for example, can be realized by adding the corresponding shared structural information.

### (Second Embodiment)

In the first embodiment, various search information elements, that is, structural search information element 152, semantic search information element 153 and signal search information element 154 are separated and extracted from search information 15 having a tree structure, and by arranging the extracted search information elements themselves type by type, units of search information 152A, 153A and 154A are formed.

In contrast, in the present embodiment, when various search information elements are separated in advance from search information 15 and recorded independently, not the search information elements themselves but information representing record positions thereof are obtained for respective ones of the search information elements, and the obtained pieces of record position information are arranged in order to form units of search information 152E, 153E and 154E.

By this configuration, similar effects as the first embodiment can be obtained. In the following, a search information managing apparatus 1A and a search apparatus 2A in accordance with the present embodiment will be described, focusing on the difference from the corresponding elements of the first embodiment. Therefore, details of the present embodiment are not described here, and detailed descriptions related to the search information managing apparatus 1 and method as well as to the search apparatus 2 in accordance with the first embodiment are similarly applicable.

The schematic configuration of the search information managing apparatus 1A in accordance with the present embodiment is shown, similar to the first embodiment, in Fig. 1. The function of search information managing apparatus 1A is slightly different from that of the first embodiment, as will be described below.

Referring to Fig. 1, search information managing apparatus 1A includes search information analyzing unit 101A, structural unit search information forming unit 102A, semantic unit search information forming unit 103A, signal unit search information forming unit 104A and unit search information control unit 105A. Search information analyzing unit 101A analyzes search information 15 having the tree structure corresponding to moving image contents, specifies structural search information element 152, semantic search information element 153 and signal search information element 154 as various search information elements, respectively, included in search information 15, and extracts, for respective ones of the specified search information elements 152 to 154, record position information 152D, 153D and 154D. Record position information 152D, 153D and 154D represent record positions where structural search information element 152, semantic search information element 153 and signal search information element 154 are recorded, respectively. Thereafter, together with information necessary to form units of search information 152E, 153E and 154E, for example, information of the types of search information elements and level information of the tree structure, the record position information 152D, 153D and 154D of search information elements 152, 153 and 154 respectively are output to corresponding structural unit search information forming unit 102A, semantic unit search information forming unit 103A and signal unit search information forming unit 104A, respectively.

Record position information 152D, 153D and 154D may include but not limited to physical position information such as a sector position of a recording medium or a bit position in a bit sequence on which the search information 15 is recorded in advance, or logical information such as a file name containing the data, a channel for data transmission or a packet.

Search information elements 152, 153 and 154 indicated by record position information 152D, 153D and 154D are independently read and utilized as needed at a time of a search, for example. Therefore, it may be convenient that the search information elements 152, 153 and 154 are separated in advance and recorded independently. In many practical servers, search information elements 152, 153 and 154 of search information 15 having the tree structure are separated and recorded in some way or other. Therefore, record position information 152D, 153D and 154D of such divided search information elements 152, 153 and 154 can directly be utilized.

When the search information 15 having the tree structure is recorded as it is and not separated in advance into search information elements 152, 153 and 154, search information analyzing unit 101A separates and records search information elements 152, 153 and 154, and generates record position information 152D, 153D and 154D thereof.

Structural unit search information forming unit 102A receives as inputs record position information 152D of each of the structural search information elements 152, and arranges the input information in order to form unit search information 152E of the structural search information consisting of pieces of record position information 152D of structural search information elements 152.

Semantic unit search information forming unit 103A receives as inputs record position information 153D of each of semantic search information elements 153 of the same type from search information analyzing unit 101A and arranges the input information in order to form unit search information 153E of the semantic search information consisting of pieces of record position information 153D of semantic search information elements 153.

Signal unit search information forming unit 104A receives as inputs record position information 154D of each of signal search information elements 154 of the same type from search information analyzing unit 101A and arranges the input information in order to form unit search information 154E of the signal search information consisting of pieces of record position information 154D of signal search information elements 154.

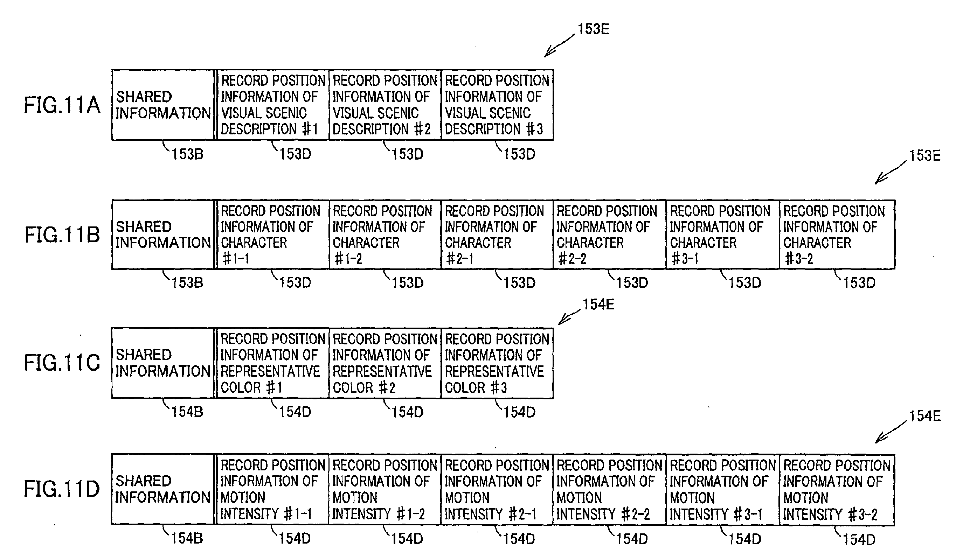

Figs. 11A to 11D represent, as examples, semantic unit search information 153E and signal unit search information 154E in accordance with the present invention. In Figs. 11A and 11B, visual scenic description information of respective scenes and character information of respective shots are shown as examples of semantic search information elements 153, and in Figs. 11C and 11D, representative color information of respective scenes and motion intensity information of respective shots are shown as examples of signal search information elements 154.

As is apparent from the comparison between Figs. 11A to 11D, 5A to 5C and 7A to 7C, the unit search information formed in accordance with the present embodiment is the same as the unit search information formed in accordance with the first embodiment, except that the elements forming the unit search information are changed from the search information elements (153,154) themselves to record position information (153D, 154D).

Therefore, the types of shared information 153B and 154B, method of extraction and the like similar to those described in the first embodiment are also applied to the present embodiment. Thus, effects similar to those obtained by the first embodiment are also obtained in the present embodiment.

Unit search information control unit 105A is connected to a processing unit 16, and, by way of example, when processing unit 16 is a transmitting unit, corresponding unit search information is transmitted, in response to a request from a destination of transmission. Unit search information control unit 105A in accordance with the present embodiment receives a request based on record position information of the search information element included in already transmitted unit search information, extracts the search information element that is indicated by the record position information corresponding to the request, and transmits the same to the source of request. When search information 15 is separated into a plurality of search information elements and the separated search information elements are recorded individually as described above, the search information elements are read (extracted) from the corresponding record positions of a medium on which search information 15 shown in Fig. 1 is recorded in advance, and transmitted to the source of request, because the recorded search information elements can be utilized as they are. When search information 15 is not separated into a plurality of search information elements, search information analyzing unit 101A separates the search information elements from search information 15, and the elements are read (extracted) from the recorded positions and transmitted to the source of request.

The schematic configuration of the search apparatus 2A in accordance with the present embodiment is shown, similar to the first embodiment, in Fig. 10. The function of search apparatus 2A is slightly different from that of the first embodiment, as will be described below.

Search apparatus 2A in accordance with the present embodiment includes a search executing unit 1001A, a structural unit search information holding unit 1002A, a semantic unit search information holding unit 1003A, a signal unit search information holding unit 1004A, and a search information control unit 1005A. Structural unit search information holding unit 1002A, semantic unit search information holding unit 1003A and signal unit search information holding unit 1004A hold units of search information 152E, 153E and 154E, respectively, and in addition they have the function of temporarily holding for every one search execution or continuously holding for a period while searches are executed, each of search information elements 152, 153, and 154 obtained based on respective record position information 152D, 153D and 154D included in the already obtained units of search information 152E, 153E and 154E, respectively.

Search executing unit 1001A selects one or an arbitrary combination of a plurality of various search information elements held in structural unit search information holding unit 1002A, semantic unit search information holding unit 1003A and signal unit search information holding unit 1004A, obtains search information elements in accordance with the selected combination, and executes a search using the obtained one or more search information elements.

When the search information elements are held only temporarily in unit search information holding units 1002A, 1003A and 1004A, that is, when the elements are discarded at every execution of a search, search executing unit 1001A starts a search not from a request for search information elements but from a request for unit search information to unit search information holding units 1002A, 1003A and 1004A, as will be described in the following. For simplicity of description, here, a search will be described as an example, which starts with a request for structural unit search information 152E. The operation is the same when semantic unit search information 153E or signal unit search information 154E is requested.

When the selected search information element 152 is not held in the corresponding structural unit search information holding unit 1002A, search executing unit 1001A requests corresponding unit search information 152E from structural unit search information holding unit 1002A.

When the requested unit search information 152E can be obtained from corresponding structural unit search information holding unit 1002A, search executing unit 1001A applies to search information control unit 1005A, the obtained unit search information 152E together with a request for a search information element. Based on the record position information 152D of the search information element included in the applied unit search information 152E, search information control unit 1005A obtains the corresponding search information element 152 from the transmitting unit or storing unit 19, and stores the obtained search information element 152 in corresponding structural unit search information holding unit 1002A. Search executing unit 1001A executes a search using search information element 152 obtained in this manner.

When the requested unit search information 152E is not held in the corresponding structural unit search information holding unit 1002A and hence cannot be obtained, search executing unit 1001A first issues a request for the unit search information 152E to search information control unit 1005A. Receiving the request as an input, search information control unit 1005A obtains the unit search information 152E in response to the input request from the transmitting unit or storing unit 19, and stores the obtained unit search information 152E in the corresponding structural unit search information holding unit 1002A. Thereafter, search executing unit 1001A applies, together with a request for a search information element, the obtained unit search information 152E to search information control unit 1005A. Based on the record position information 152D of the search information element included in the applied unit search information 152E, search information control unit 1005A obtains the corresponding search information element 152 from the transmitting unit or storing unit 19, and stores the obtained search information element 152 in the corresponding structural unit search information holding unit 1002A. Search executing unit 1001A executes a search for moving image contents (data of moving image contents prepared by the transmitting unit or storing unit 19), using the search information element 152 obtained in this manner.

As will be understood from the foregoing, search apparatus 2A in accordance with the present embodiment differs from search apparatus 2 in accordance with the first embodiment in that, as regards the manner of obtaining the search information, two steps are taken. Namely, the record position information of the search information element is obtained from the unit search information, and from the obtained record position information, the corresponding search information element is obtained. Except for this point, the processes are the same. Therefore, similar effects as obtained in the first embodiment can also be obtained in the present embodiment.

According to the present embodiment that uses unit search information consisting only of the record position information, only a small amount of signals have to be recorded, as compared with the unit search information consisting of various search information elements themselves. Therefore, in such a situation that a searcher conducts a search using a client terminal such as a portable information terminal having a small storage capacity, the search method is effective, in which only the unit search information in accordance with the present embodiment is continuously held in the client terminal and only the necessary search information elements are obtained from a server apparatus (corresponding to the transmitting unit or storing unit 19 of Fig. 10) using the unit search information at the time of executing a search. The sever apparatus has data of moving image contents and data of search information 15 that are separated into search information elements in advance recorded therein, and the server has a function of reading and outputting to the source of request the data of the moving image contents or the data of search information 15, in response to a request from the outside.

Therefore, it is possible to know, in a simple manner, what search information exists in the server apparatus from the unit search information, and efficiency of executing a search can be improved, since only the necessary search information is transmitted.

In the foregoing, the timing at which the unit search information is obtained from the transmitting unit or storing unit 19 has been described as dependent on the request of the searcher. The description is not limiting, and, by way of example, various units of search information may only be automatically obtained by a client terminal at the start of a search. There is no limit on the timing of obtaining or discarding the unit search information.

In the foregoing, holding time of the search information element obtained based on the record position information in the unit search information has been described as temporal, that is, the element is discarded every time a search is executed, or continuous, that is, the element is held for the period of execution of searches. The description, however, is not limiting, and such a management may be possible in that the element is held for a prescribed time period and discarded if there is no access to the element in the prescribed time period. There is no limit as to the holding time of the search information element.

### (Third Embodiment)

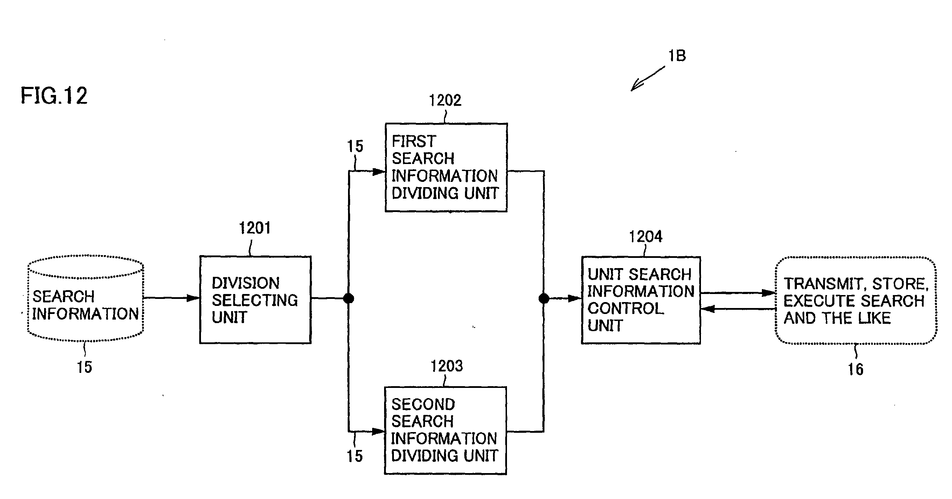

Fig. 12 shows a schematic configuration of a search information managing apparatus 1B in accordance with the present embodiment. Search information managing apparatus 1B includes a division selecting unit 1201, first search information dividing unit 1202, second search information dividing unit 1203 and a unit search information control unit 1204. Division selecting unit 1201 designates manner of search, that is, whether the desired manner of search for the moving image contents is an on-line search or an off-line search. In accordance with the designated manner of executing a search, the method of division of search information 15, that is, the form of the unit search information obtained by the division, is selected. Search information 15 is, for example, the search information 15 having the tree structure shown in Fig. 2.

When an off-line search is designated and the unit search information associated with the types of search information elements is selected as the method of dividing search information 15, division selecting unit 1201 instructs first search information dividing unit 1202 to execute division of search information 15. When an on-line search is designated and unit search information consisting of time sections is selected as the method of dividing search information 15, division selecting unit 1201 instructs second search information dividing unit 1203 to execute division of search information 15. In a special example in which an off-line search and an on-line search are conducted simultaneously, division selecting unit 1201 instructs both the first and second search information dividing units 1202 and 1203 to execute division of search information 15 (formation of unit search information).

First search information dividing unit 1202 receives as an input the search information 15, executes division of search information 15 associated with the types of search information elements as described in the first (second) embodiment, and forms and outputs units of search information 152A, 153A (153E) and 154A (154E) associated with the types of search information such as shown in Figs. 3, 5A to 5C, 6A to 6C, 7A to 7C and 8A to 8C (11A to 11D).

Second search information dividing unit 1203 receives as an input the search information 15, executes division using time section as a unit as shown in Figs. 16 and 17, and forms and outputs unit search information along time section.

Unit search information control unit 1204 is connected to processing unit 16, selects one or both of the unit search information associated with the types of search information elements formed by first search information dividing unit 1202 and the unit search information along the time section formed by second search information dividing unit 1203 in response to a request from processing unit 16, and outputs the selected information to the source of request.

As the division selecting unit 1201 is provided, appropriate control of search information (formation of unit search information) in accordance with the manner of executing a search for the moving image contents becomes possible.

## Claims

1. A search information managing apparatus (1) managing search information (15) having a tree structure corresponding to moving image contents divided into small units of search information (152A, 153A, 154A), comprising:
separating means (101) for separating said search information into structural search information representing a structure of said moving image contents, semantic search information representing characteristics in semantic context of said moving image contents, and signal search information representing physical characteristics of signals of said moving image contents to be output; and
unit search information forming means (102, 103, 104) for forming at least one of said small units of search information consisting of said structural search information, said semantic search information or said signal search information output from said separating means, respectively.

2. A search information managing apparatus (1) managing search information (15) having a tree structure corresponding to moving image contents divided into small units of search information (152A, 153A, 154A), comprising:
separating means (101) for separating and extracting, from said search information, one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information; and
unit search information forming means (102, 103, 104) for forming said small unit of search information by arranging said one or a plurality of search information elements extracted by said separating means in accordance with a prescribed format.

3. The search information managing apparatus according to claim 2, wherein
said one or a plurality of search information elements extracted by said separating means correspond to signal search information (154) representing physical characteristics of signals of said moving image contents.

4. The search information managing apparatus according to claim 2, wherein
said one or a plurality of search information elements extracted by said separating means correspond to semantic search information (153) representing characteristics in semantic context of said moving image contents.

5. The search information managing apparatus according to claim 2, wherein
said prescribed format represents an arrangement of said one or a plurality of search information elements extracted by said separating means, in accordance with order of appearance in said tree structure.

6. The search information managing apparatus according to claim 2, wherein
said small units of search information are formed by adding, to an arrangement of said one or a plurality of search information elements extracted by said separating means, additional information (153B, 154B) including type information or including position information in said tree structure shared by said one or a plurality of search information elements extracted by said separating means.

7. The search information managing apparatus according to claim 2, wherein
said small units of search information are formed by adding, to an arrangement of said one or a plurality of search information elements extracted by said separating means, additional information (153C, 154C) including position information of said tree structure related to each of said one or a plurality of search information elements extracted by said separating unit.

8. A search information managing apparatus (1A) managing small units of search information (152E, 153E, 154E) formed from search information (15) having a tree structure corresponding to moving image contents, comprising:
record position information extracting means (101A) for extracting, for each of one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information, record position information (152D, 153D, 154D) representing a position where the corresponding search information element is recorded; and
unit search information forming means (102A, 103A, 104A) for forming said small unit of search information (152E, 153E, 154E) by arranging said record position information extracted by said record position information extracting means corresponding to each of said one or a plurality of search information elements, in accordance with a prescribed format.

9. The search information managing apparatus according to claim 8, wherein
said one or a plurality of search information elements correspond to signal search information (154) representing physical characteristics of signals of said moving image contents.

10. The search information managing apparatus according to claim 8, wherein
said one or a plurality of search information elements correspond to semantic search information (153) representing characteristics in semantic context of said moving image contents.

11. The search information managing apparatus according to claim 8, wherein
said prescribed format represents an arrangement of said record position information in accordance with order of appearance of corresponding said one or a plurality of search information elements in said tree structure.

12. The search information managing apparatus according to claim 8, wherein
said small units of search information are formed by adding, to an arrangement of said record position information corresponding to said one or a plurality of search information elements, additional information (153B, 154B) including type information or including position information in said tree structure, shared by said one or a plurality of search information elements.

13. The search information managing apparatus according to claim 8, wherein
said small units of search information are formed by adding, to an arrangement of said record position information corresponding to said one or a plurality of search information elements, additional information (153C, 154C) including position information of said tree structure related to each of said one or a plurality of search information elements.

14. A search information managing apparatus (1B) managing search information (15) having a tree structure corresponding to moving image contents divided into small units of search information, comprising:
first search information dividing means (1202) for separating said search information into structural search information representing a structure of said moving image contents, semantic search information representing characteristics in semantic context of said moving image contents, and signal search information representing physical characteristics of signals of said moving image contents to be output, and forming, from said separated structural search information, semantic search information and signal search information, a small unit of search information;
second search information dividing means (1203) for dividing said search information along time section based on said tree structure, and forming, from the divided search information, a small unit of search information; and
division selecting means (1201) for selecting whether said search information is to be divided by said first search information dividing means or said second search information dividing means, in accordance with a desired manner of search.

15. A search information managing apparatus (1B) managing search information (15) having a tree structure corresponding to moving image contents divided into small units of search information, comprising:
first forming means (1202) for separating and extracting, from said search information, one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information, and forming a small unit of search information by arranging said one or a plurality of search information elements in accordance with a prescribed format;
second forming means (1203) for dividing said search information along time section based on said tree structure, and forming, from the divided search information, a small unit of search information; and
selecting means (1201) for selecting whether said small unit of search information is to be formed by said first forming means or said second forming means, in accordance with a desired manner of search.

16. A search information managing method managing search information (15) having a tree structure corresponding to moving image contents divided into small units of search information (152A, 153A, 154A), comprising:
separating step of separating said search information into structural search information representing a structure of said moving image contents, semantic search information representing characteristics in semantic context of said moving image contents, and signal search information representing physical characteristics of signals of said moving image contents to be output; and
unit search information forming step of forming at least one of said small units of search information consisting of said structural search information, said semantic search information or said signal search information output from said separating step, respectively.

17. A search information managing method of managing search information (15) having a tree structure corresponding to moving image contents divided into small units of search information (152A, 153A, 154A), comprising:
separating step of separating and extracting, from the search information, one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information; and
unit search information forming step of forming said small unit of search information by arranging said one or a plurality of search information elements extracted by said separating step in accordance with a prescribed format.

18. A search information managing method managing small units of search information formed from search information (15) having a tree structure corresponding to moving image contents, comprising:
record position information extracting step of extracting, for each of one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information, record position information representing a position where the corresponding search information element is recorded; and
unit search information forming step of forming said small unit of search information by arranging said record position information extracted by said record position information extracting step corresponding to each of said one or a plurality of search information elements, in accordance with a prescribed format.

19. A search information managing method of managing search information (15) having a tree structure corresponding to moving image contents divided into small units of search information, comprising:
first search information dividing step of separating said search information into structural search information representing a structure of said moving image contents, semantic search information representing characteristics in semantic context of said moving image contents, and signal search information representing physical characteristics of signals of said moving image contents to be output, and forming, from said separated structural search information, semantic search information or signal search information, a small unit of search information;
second search information dividing step of dividing said search information along time section based on said tree structure, and forming, from the divided search information, a small unit of search information; and
division selecting step of selecting whether said search information is to be divided by said first search information dividing step or said second search information dividing step, in accordance with a desired manner of search.

20. A search information managing method of managing search information (15) having a tree structure corresponding to moving image contents divided into small units of search information, comprising:
first forming step of separating and extracting, from said search information, one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information, and forming small unit of search information by arranging said one or a plurality of search information elements in accordance with a prescribed format;
second forming step of dividing said search information along time section based on said tree structure, and forming, from the divided search information, a small unit of search information; and
selecting step of selecting whether said small unit of search information is to be formed by said first forming step or said second forming step, in accordance with a desired manner of search.

21. A search apparatus (2) executing a search based on a small unit of search information obtained by dividing search information having a tree structure corresponding to moving image contents, wherein
said small unit of search information is at least one of small units of search information formed of structural search information representing a structure of said moving image contents, semantic search information representing characteristics in semantic context of said moving image contents, or signal search information representing physical characteristics of signals of said moving image contents;
said search apparatus comprising:
holding means for holding said small unit of search information; and
search executing means for executing a search for said moving image contents using said small unit of search information.

22. A search apparatus (2) executing a search based on a small unit of search information obtained by dividing search information (15) having a tree structure corresponding to moving image contents, wherein
said small unit of search information is search information formed by separating and extracting, from said search information, one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information and by arranging extracted elements in accordance with a prescribed format;
said search apparatus comprising:
holding means for holding said small unit of search information; and
search executing means for executing a search for said moving image contents using said small unit of search information held by said holding means.

23. A search apparatus (2) executing a search based on a small unit of search information formed from search information (15) having a tree structure corresponding to moving image contents, wherein
said small unit of search information is search information formed by arranging in a prescribed format, for each of one or a plurality of search information elements given by one or a plurality of leaves (RF) of the tree structure or one or a plurality of sub-trees consisting of an arbitrary set of a node (ND) and leaves or nodes of lower levels linked to the node of the tree structure, representing elements of the same type included in said search information, record position information representing a position where the search information element is recorded;
said search apparatus comprising:
first holding means for holding said small unit of search information;
second holding means for holding said one or a plurality of search information elements obtained by using said small unit of search information; and
search executing means for executing a search for said moving image contents using said small unit of search information and said one or a plurality of search information elements.

## Amended claims

### Amended claims under Art. 19.1 PCT

1. A search information managing apparatus (1) managing search information (15) having a tree structure corresponding to moving image contents divided into small units of search information (152A, 153A, 154A), comprising:
separating means (101) for separating said search information into structural search information representing a structure of said moving image contents, semantic search information representing characteristics in semantic context of said moving image contents, and signal search information representing physical characteristics of signals of said moving image contents to be output; and
unit search information forming means (102, 103, 104) for forming at least one of said small units of search information consisting of said structural search information, said semantic search information or said signal search information output from said separating means, respectively.

2. (Amended) A search information managing apparatus (1) managing search information (15) having a tree structure corresponding to moving image contents divided into small units of search information (152A, 153A, 154A), comprising:
separating means (101) for separating and extracting, from said search information, one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information; and
unit search information forming means (102, 103, 104) for forming said small unit of search information by arranging said one or a plurality of search information elements extracted by said separating means in accordance with a prescribed format.

3. The search information managing apparatus according to claim 2, wherein
said one or a plurality of search information elements extracted by said separating means correspond to signal search information (154) representing physical characteristics of signals of said moving image contents.

4. The search information managing apparatus according to claim 2, wherein
said one or a plurality of search information elements extracted by said separating means correspond to semantic search information (153) representing characteristics in semantic context of said moving image contents.

5. (Amended) The search information managing apparatus according to claim 2, wherein
said prescribed format represents an arrangement of said one or a plurality of search information elements extracted by said separating means, in accordance with order of appearance within said tree structure.

6. The search information managing apparatus according to claim 2, wherein
said small units of search information are formed by adding, to an arrangement of said one or a plurality of search information elements extracted by said separating means, additional information (153B, 154B) including type information or including position information in said tree structure shared by said one or a plurality of search information elements extracted by said separating means.

7. The search information managing apparatus according to claim 2, wherein
said small units of search information are formed by adding, to an arrangement of said one or a plurality of search information elements extracted by said separating means, additional information (153C, 154C) including position information of said tree structure related to each of said one or a plurality of search information elements extracted by said separating unit.

8. (Amended) A search information managing apparatus (1A) managing small units of search information (152E, 153E, 154E) formed from search information (15) having a tree structure corresponding to moving image contents, comprising:
record position information extracting means (101A) for extracting, for each of one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information, record position information (152D, 153D, 154D) representing a position where the corresponding search information element is recorded; and
unit search information forming means (102A, 103A, 104A) for forming said small unit of search information (152E, 153E, 154E) by arranging said record position information extracted by said record position information extracting means corresponding to each of said one or a plurality of search information elements, in accordance with a prescribed format.

9. The search information managing apparatus according to claim 8, wherein
said one or a plurality of search information elements correspond to signal search information (154) representing physical characteristics of signals of said moving image contents.

10. The search information managing apparatus according to claim 8, wherein
said one or a plurality of search information elements correspond to semantic search information (153) representing characteristics in semantic context of said moving image contents.

11. (Amended) The search information managing apparatus according to claim 8, wherein
said prescribed format represents an arrangement of said record position information in accordance with order of appearance of said search information elements corresponding to said record position information within said tree structure.

12. The search information managing apparatus according to claim 8, wherein
said small units of search information are formed by adding, to an arrangement of said record position information corresponding to said one or a plurality of search information elements, additional information (153B, 154B) including type information or including position information in said tree structure, shared by said one or a plurality of search information elements.

13. The search information managing apparatus according to claim 8, wherein
said small units of search information are formed by adding, to an arrangement of said record position information corresponding to said one or a plurality of search information elements, additional information (153C, 154C) including position information of said tree structure related to each of said one or a plurality of search information elements.

14. A search information managing apparatus (1B) managing search information (15) having a tree structure corresponding to moving image contents divided into small units of search information, comprising:
first search information dividing means (1202) for separating said search information into structural search information representing a structure of said moving image contents, semantic search information representing characteristics in semantic context of said moving image contents, and signal search information representing physical characteristics of signals of said moving image contents to be output, and forming, from said separated structural search information, semantic search information and signal search information, a small unit of search information;
second search information dividing means (1203) for dividing said search information along time section based on said tree structure, and forming, from the divided search information, a small unit of search information; and
division selecting means (1201) for selecting whether said search information is to be divided by said first search information dividing means or said second search information dividing means, in accordance with a desired manner of search.

15. (Amended) A search information managing apparatus (1B) managing search information (15) having a tree structure corresponding to moving image contents divided into small units of search information, comprising:
first forming means (1202) for separating and extracting, from said search information, one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information, and forming a small unit of search information by arranging said one or a plurality of search information elements in accordance with a prescribed format;
second forming means (1203) for dividing said search information along time section based on said tree structure, and forming, from the divided search information, a small unit of search information; and
selecting means (1201) for selecting whether said small unit of search information is to be formed by said first forming means or said second forming means, in accordance with a desired manner of search.

16. A search information managing method managing search information (15) having a tree structure corresponding to moving image contents divided into small units of search information (152A, 153A, 154A), comprising:
separating step of separating said search information into structural search information representing a structure of said moving image contents, semantic search information representing characteristics in semantic context of said moving image contents, and signal search information representing physical characteristics of signals of said moving image contents to be output; and
unit search information forming step of forming at least one of said small units of search information consisting of said structural search information, said semantic search information or said signal search information output from said separating step, respectively.

17. (Amended) A search information managing method of managing search information (15) having a tree structure corresponding to moving image contents divided into small units of search information (152A, 153A, 154A), comprising:
separating step of separating and extracting, from the search information, one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information; and
unit search information forming step of forming said small unit of search information by arranging said one or a plurality of search information elements extracted by said separating step in accordance with a prescribed format.

18. (Amended) A search information managing method managing small units of search information formed from search information (15) having a tree structure corresponding to moving image contents, comprising:
record position information extracting step of extracting, for each of one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information, record position information representing a position where the corresponding search information element is recorded; and
unit search information forming step of forming said small unit of search information by arranging said record position information extracted by said record position information extracting step corresponding to each of said one or a plurality of search information elements, in accordance with a prescribed format.

19. A search information managing method of managing search information (15) having a tree structure corresponding to moving image contents divided into small units of search information, comprising:
first search information dividing step of separating said search information into structural search information representing a structure of said moving image contents, semantic search information representing characteristics in semantic context of said moving image contents, and signal search information representing physical characteristics of signals of said moving image contents to be output, and forming, from said separated structural search information, semantic search information or signal search information, a small unit of search information;
second search information dividing step of dividing said search information along time section based on said tree structure, and forming, from the divided search information, a small unit of search information; and
division selecting step of selecting whether said search information is to be divided by said first search information dividing step or said second search information dividing step, in accordance with a desired manner of search.

20. (Amended) A search information managing method of managing search information (15) having a tree structure corresponding to moving image contents divided into small units of search information, comprising:
first forming step of separating and extracting, from said search information, one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information, and forming a small unit of search information by arranging said one or a plurality of search information elements in accordance with a prescribed format;
second forming step of dividing said search information along time section based on said tree structure, and forming, from the divided search information, a small unit of search information; and
selecting step of selecting whether said small unit of search information is to be formed by said first forming step or said second forming step.

21. (Cancelled)

22. (Cancelled)

23. (Amended) A search apparatus (2) executing a search based on a small unit of search information formed from search information (15) having a tree structure corresponding to moving image contents, wherein
said small unit of search information is search information formed by arranging in a prescribed format, for each of one or a plurality of search information elements given by one or a plurality of leaves (RF) of the tree structure or given by one or a plurality of sub-trees consisting of an arbitrary set of a node (ND) and leaves or nodes of lower levels linked to the node of the tree structure, representing elements of the same type included in said search information, record position information representing a position where the search information element is recorded;
said search apparatus comprising:
first holding means for holding said small unit of search information;
second holding means for holding said one or a plurality of search information elements obtained by using said small unit of search information; and
search executing means for executing a search for said moving image contents using said small unit of search information and said one or a plurality of search information elements.
